# EUROPEAN PATENT SPECIFICATION

(11) **EP 0 531 924 B1**
(45) Date of publication and mention of the grant of the patent: **26.03.1997**
(21) Application number: 92115310.2
(22) Date of filing: 08.09.1992
(51) Int. Cl.: G01P 3/44

(54) **Device for gauging the revolving speed between two members in relative rotation**
Vorrichtung zur Messung der relativen Drehgeschwindigkeit zwischen zwei Bauteilen
Dispositif de mesure de la vitesse de rotation relative entre deux pièces

(30) Priority: 12.09.1991 IT TO910695
(43) Date of publication of application: 17.03.1993
(73) Proprietor: SKF INDUSTRIE S.P.A., I-10123 Torino (IT)
(72) Inventor: Bertetti, Paolo, I-10153 Torino (IT); Peretti, Pietro, I-10060 Piscina (Torino) (IT)
(74) Representative: Lotti, Giorgio

(56) References cited:
- EP-A- 0 376 771
- EP-A- 0 420 041
- DE-A- 1 911 513
- DE-A- 2 243 331

## Description

The present invention lies in the field of devices for gauging the revolving speed between two members in relative rotation, such as the supporting members of a vehicle wheel. The invention relates more particularly to a device for locking the flux concentrator in which a coil is wound for gauging the revolving speed.

At present, control circuits known as ABS, ASR, TDWS, are usually fitted with common basic components, such as a phonic wheel, a gauging sensor, a local processing unit and an oleodynamic shunt connection unit.

The phonic wheel is usually a toothed ring that is mounted on the rotating part to be kept under control, while the sensor is installed on a fixed portion of the chassis facing the toothed part of the phonic wheel at a prearranged distance.

The electric signals coming from the single sensors are sent to the local processing unit that gauges, in the case of ABS systems, the differences between the revolving speeds of the wheels.

In this particular case, the sensor is formed by a coil (passive sensor) comprising a number of windings disposed inside a special device, the flux concentrator. The phonic wheel is a multipolar magnetised ring.

EP-A-0 376 771 discloses a sensor arrangement according to which the sensor is supported by a ring which is coupled to the non rotating race of the wheel hub bearing by spring locking means in form of elastic fingers engaging a groove obtained in said non rotating race.

It is an object of the present invention to provide a device that allows to carry out in two separate stages the assembly of the phonic wheel on the bearing and of the coil with its flux concentrator on the standard of the vehicle chassis that carries the bearing.

In particular, the second operation should be accomplished quickly.

It is another object of the invention to provide a device that facilitates the operations for connecting the sensor to the local processing unit and that enables to substitute the sensor in case of breakdown without having to remove the bearing. For these and further objects, that will appear as the description proceeds, this invention provides a device according to claim 1.

The accompanying drawings illustrate two examples of physical embodiments of the invention constructed according to the best mode so far devised for the practical application of the principles thereof, in which:
- Fig. 1: is a cross sectional view taken along an axial plane of a wheel bearing on which a device according to this invention is mounted;
- Fig. 2: shows another embodiment of the invention, different from the one of fig. 1; and
- Fig. 3: is a cross sectional view of the device of fig. 1 taken along a different axial plane so as to show other constructional details of the invention.

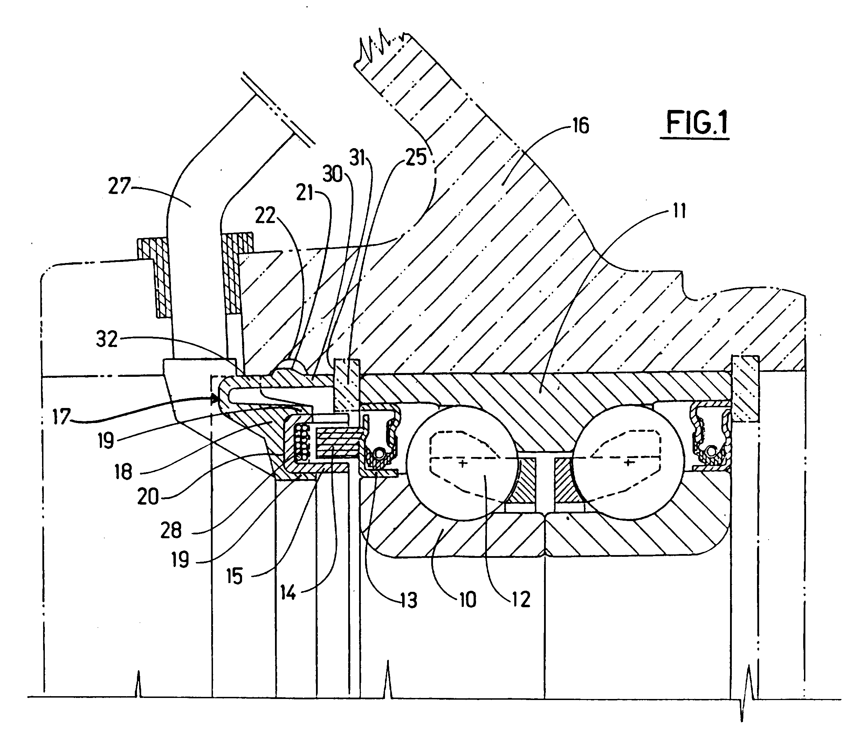

Referring to fig. 1, the numeral 10 designates the inner race, numeral 11 the outer race and numeral 12 the balls of a rolling contact bearing. A phonic wheel 14 is mounted on the inner revolving race 10 by means of a screen 13. The phonic wheel 14 is partially inserted in a flux concentrator 15 formed by a toothed ring with a C shaped cross section which is attached to a standard 16 of the vehicle chassis. According to the invention, the member that connects the flux concentrator to the vehicle standard 16 is a ring 17 having a central portion 18 provided with a pair of concentric edges 19 forming therebetween a seat 20 for receiving the flux concentrator 15. Fitted with variously spaced protuberances 21 is an elastic horizontal tongue 32 which extends from the central portion 18 for quick coupling into suitable grooves 22 obtained in the body of the vehicle standard 16.

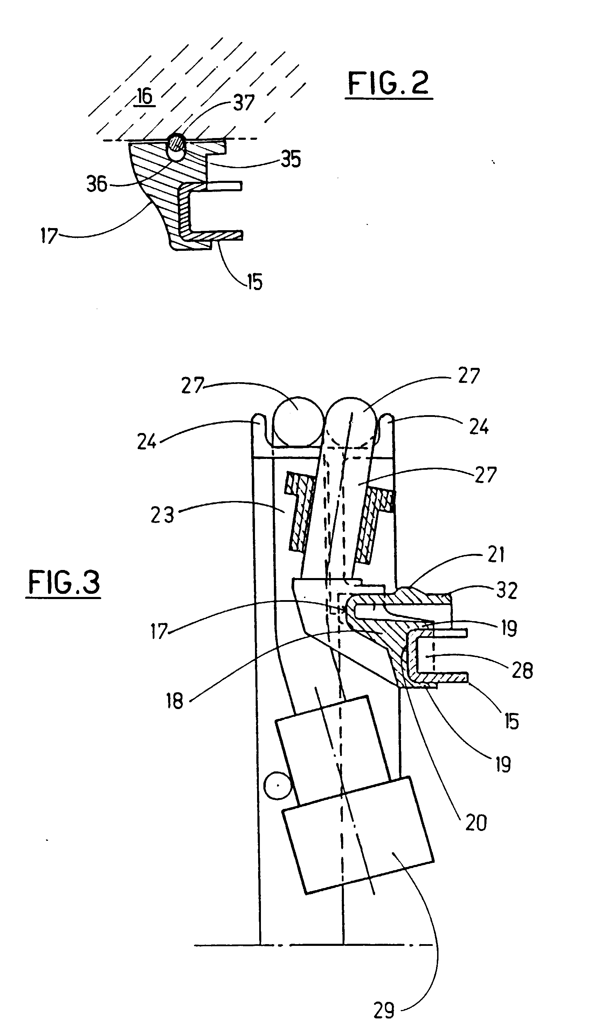

Alternatively (fig. 2), quick coupling of the ring 17 can be accomplished by means of a circular elastic expansion ring 35 fitted inside a circumferential groove 36 of the ring 17 and facing a similar groove 37 obtained in the vehicle standard 16. Prior to assembly, as shown in fig. 3, a reel 23 having circumferential fins 24 is applied to the ring 17, disposed parallel with respect thereto, through a cable 27, one end of which is integral to the ring 17.

The function of the reel 23 is to keep the cable 27 rolled up. Cable 27 connects the coil 28 located in the flux concentrator 15 to the local processing unit (not shown) that receives the connector 29 of the cable 27. The circumferential fins 24 hold the rolled up portion of cable 27 onto the reel 23.

The flux concentrator locking device of this invention is particularly useful during assembly operations. According to prior art, the phonic wheel and the gauging sensor with its flux concentrator have to be mounted in succession on the bearing. Also, a problem arises due to the presence of the cable connecting the coil to the unit. This cable, that must be long enough to reach the connections of the local processing unit, comes out of the concentrator and forms an obstacle during the various assembly operations.

The device of this invention resolves the above inconveniences.

The coil 28 is separately wound up inside the flux concentrator 15, then the ring 17 that holds the concentrator 15 and the reel 23 is spring mounted onto the chassis pushing the edge 30 of tongue 32 against the vertical surface 31 of the bearing elastic retaining ring 25 or of an abutment obtained directly on the vehicle standard 16. At this point the cable 27 is unrolled from the reel 23 and the end that carries the connector 29 is connected to the inner wiring of the body of the vehicle leading to the processing unit which is usually far away from the wheel hubs.

The reel 23, by this time unusable, can be thrown away or used for other applications.

Although two alternative embodiments of the invention have been described and illustrated in the attached drawings, it is understood that similar devices (not shown) can be realised comprising various locking means, such as modelled or perforated edges and appendixes to allow quick coupling of the ring 17 to the vehicle standard, attaining the same advantages of the illustrated embodiments.

## Claims

1. A device for gauging the revolving speed of the rotating race (10) of a wheel hub bearing, the device comprising a standard (16) of the vehicle chassis supporting the non-rotating race of the bearing, a revolving phonic wheel (14) mounted on the rotating race of the bearing, and a non-rotating sensor coil (28) retained by a ring (17) provided with spring locking means (32, 21, 35) for quick axial coupling to a corresponding fixed seat (22) after mounting of the phonic wheel (14) on the rotating race, characterised in that:
said ring (17) is provided with a pair of concentric edges (19) forming therebetween an axially inwardly facing seat (20) adapted to retain a flux concentrator in the form of a toothed ring (15);
said toothed ring (15) provided in the seat (20) of said ring (17) has an axially inwardly facing C-shaped cross section in which said coil (28) is wound axially facing said phonic wheel (14), which phonic wheel (14) is partially axially inserted in the toothed ring (15); and
said fixed seat (22) is obtained in said standard (16) of the vehicle chassis.

2. A device according to claim 1, characterised in that the cable (27) connecting the coil (28) to a local processing unit is lead through said ring (17) and temporarily rolled up on a reel (23) applied to said ring (17) before mounting the ring (17) to the vehicle standard (16).

## Patentansprüche

1. Vorrichtung zur Messung der Drehgeschwindigkeit des Drehrings (10) eines Radnabenlagers, welche einen den nicht-drehenden Ring des Lagers stützenden Sitz (16) des Fahrzeuggestells, ein auf dem Drehring des Lagers montiertes phonisches Drehrad (14) und eine nicht-drehende Meßspule (28) umfaßt, die durch einen Ring (17) gehalten wird, der zur schnellen axialen Verbindung mit einem entsprechenden festen Sitz (22) nach Montage des phonischen Rades (14) auf dem Drehring mit einem Federverschlußmittel (32, 21, 35) ausgestattet ist,
dadurch gekennzeichnet,
daß der Ring (17) mit einem Paar konzentrischer Kanten (19) versehen ist, die zwischen sich einen axial nach innen schauenden Sitz (20) bilden, der geeignet ist, einen Flußkonzentrator in Form eines Zahnringes (15) zu halten;
daß der in dem Sitz (20) des Rings (17) vorgesehene Zahnring (15) einen axial nach innen schauenden C-förmigen Querschnitt aufweist, in dem die Spule (28) axial gewunden ist und dem phonischen Rad (14) gegenüberliegt, welches teilweise axial in den Zahnring (15) eingeführt wird; und
daß der feste Sitz (22) in dem Sitz (16) des Fahrzeuggestells aufgenommen ist.

2. Vorrichtung nach Anspruch 1,
dadurch gekennzeichnet,
daß das die Spule (28) mit einer zentralen Verarbeitungseinheit verbindende Kabel (27) durch den Ring (17) geführt wird und zeitweise auf eine Rolle (23) aufgerollt wird, die an den Ring (17) angebracht wird, bevor der Ring (17) an dem Fahrzeugsitz (16) montiert wird.

## Revendications

1. Dispositif pour mesurer la vitesse de rotation relative de la bague rotative (10) d'un palier de moyeu de roue, le dispositif comportant un montant (16) du châssis du véhicule supportant la bague non-rotative du palier, une roue phonique tournante (14) agencée sur la bague rotative du palier, et une bobine formant détecteur non rotatif (28) retenue par un anneau (17) muni de moyens de verrouillage élastique (32,21,35) pour une liaison axiale rapide avec un siège fixe correspondant (22) après montage de la roue phonique (40) sur la bague rotative, caractérisé en ce que :
ledit anneau (17) est muni de deux bords concentriques (19) formant entre eux un siège dirigé axialement vers l'intérieur, adapté pour retenir un concentrateur de flux ayant la forme d'un anneau denté (15) ;
ledit anneau denté (15) agencé dans le siège (20) dudit anneau (17) a une section transversale en forme de C dirigé axialement vers l'intérieur dans laquelle ladite bobine (28) est enroulée axialement en vis à vis de ladite roue phonique (14), laquelle roue phonique (14) est partiellement insérée axialement dans l'anneau dentée (15) ; et
ledit siège fixe (22) est obtenu dans ledit montant (16) du châssis du véhicule.

2. Dispositif selon la revendication 1, caractérisé en ce que le câble (27) reliant la bobine (28) à une unité locale de traitement est amené à travers ledit anneau (17) et enroulé temporairement sur un corps de bobine (23) appliqué sur ledit anneau (17) avant le montage de l'anneau (17) sur le montant du véhicule (16).
